# EUROPEAN PATENT SPECIFICATION

(11) **EP 2 997 678 B1**
(45) Date of publication and mention of the grant of the patent: **29.06.2016**
(21) Application number: 14719850.1
(22) Date of filing: 30.04.2014
(51) Int. Cl.: H04B 17/00, G01S 19/23, G01S 1/02

(54) **RF SIGNAL GENERATING DEVICE**
HF-SIGNAL-ERZEUGUNGSVORRICHTUNG
DISPOSITIF DE GÉNÉRATION DE SIGNAL RF

(30) Priority: 17.05.2013 GB 201308972; 17.05.2013 US 201313897066
(43) Date of publication of application: 23.03.2016
(73) Proprietor: CRFS Limited, Cambridgeshire CB25 9TL (GB)
(72) Inventor: MASSARELLA, Alistair, Cambridge Cambridgeshire CB25 9TH (GB); HYDE, Stewart, Cambridge Cambridgeshire CB25 9TL (GB); TIMSON, Daniel, Cambridge Cambridgeshire CB25 9TL (GB); WILLIAMSON, Steven, Cambridge Cambridgeshire CB25 9TL (GB)
(74) Representative: Piotrowicz, Pawel Jan Andrzej
(86) International application number: PCT/GB2014/051328
(87) International publication number: WO 2014/184519

(56) References cited:
- EP-A1- 1 578 032
- GB-A- 898 055
- US-B1- 7 432 856
- Anritsu: "Product Introduction MF6900A Fading Simulator", , 25 November 2010 (2010-11-25), XP055119412, Retrieved from the Internet: URL:http://downloadfile.anritsu.com/Files/ en-AU/Product-Introductions/Product-Introd uction/MF6900A_EL1300.pdf?f4739ea0f83b43ad 1015d39072bcf8be4c98be0ef95c261cfb73f2f410 d690317553846986f794877e2053cc0d45e3f1d087 bdd6923c68100ed8ca6f90fc795d39a5d10ce888e7 bca02b9a683d807ef5f74baed5f14886ef6cb97313 cf8cc13353 [retrieved on 2014-05-22]

## Description

### Field of the Invention

The present invention relates to a device for generating an RF signal for use in RF signal detection. In particular, the device can be used for training operators of RF signal detection equipment.

### Background

Devices which can detect and measure radio frequency (RF) signals can be used in a variety of different applications including spectrum management and security. For example, RF signal detection equipment having a direction finding capability can be used to identify and locate RF sources (herein referred to as "RF transmitters").

Operators (or "users") need to be trained to use such types of devices. However, there are considerable challenges to providing these users with effective field training. For instance, RF sources need to be deployed and configured, and be operated in a controlled manner. This may be onerous, time consuming and/or complex, particularly if sources are mobile and frequencies need to be coordinated. Moreover, it may be necessary to procure a licence to operate sources which may be costly to obtain and/or which might place tight restrictions on operation. In some cases, licences may be unavailable.

US 7,432,856 B1 describes a signal simulation device for testing and developing radio receivers adapted to orientate antenna beams to different radio transmitters and to simultaneously suppress interference signals, comprises an antenna array, a signal generator generating reproducible digital signals in the complex baseband, and a digital matrix processor combined and synchronized with the signal generator. The input signals of the matrix processor are phase shifted according to a direction of incidence and to relative positions of the elements within the antenna array of the radio receiver, and amplitude and phase shift are simulated by weighting of the input signals from the signal generator.

EP 1 578 032 A1 describes a transmission path simulator including a switch for forming M x N channel signals by duplicating the N the M signals obtained by a transmission system, channel processing sections for giving correlated instantaneous fluctuation and short interval fluctuation in accordance with arrangement of the transmission/ reception antenna to each of the M x N channel signals, and a selection synthesis section for selectively synthesizing by M the M x N channel signals given by the transmission path fluctuation, so as to form N signals.

### Summary

According to a first aspect of the present invention there is provided apparatus comprising a positioning device for providing a location of an RF signal detector or a location of an antenna associated with the RF signal detector, an orientation determining device for providing an orientation of the antenna associated with the RF signal detector, at least one processor configured to generate a set of IQ data based on at least one set of weighted IQ data, the or each set of weighted IQ data having a respective weight, and a circuit configured to generate an RF signal using the set of IQ data. The at least one processor is configured to calculate each respective weight in dependence upon the location and the orientation. The positioning device is configured to feed back the location to the processor, the orientation determining device is configured to feed back the orientation to the processor, and the processor is configured to update the weights in dependence upon the location and the orientation. The location may be an actual location or a simulated location. The location of the apparatus may be used as the location.

Each set of weighted IQ data can be used to generate data for simulating a respective wireless RF transmitter. However, the RF signal can be supplied to an RF signal detector by a wired connection. Thus, the apparatus can be used to emulate an RF signal which an RF signal detector would receive in a real environment in which there are a number of RF sources. Accordingly, the apparatus can be used to train an operator of the RF signal detector without the need for using real test RF sources. Furthermore, it can allow greater flexibility during training, for example, by allowing the number, type and/or characteristics of the simulated (or "virtual") RF sources to be easily controlled.

The apparatus may comprise an interface for receiving an indication of the location(for example, a selection made using a pointer on a map or a set of coordinates) and/or an instruction modifying the location (for example, applying an offset). The interface may receive the indication from a remote location. The interface may be a user interface for receiving the indication or instruction locally.

The location of the apparatus may be used as the location of the RF signal detector, the antenna associated with the RF signal detector and/or the substitute device.

The at least one processor may be configured to calculate each respective weight in dependence upon location of a respective wireless RF transmitter being simulated. The apparatus may comprise an interface for receiving an indication of the locations of the wireless RF transmitter being simulated (for example, a selection made using a pointer on a map or a set of coordinates) and/or an instruction modifying the location of the wireless RF transmitters being simulated (for example, applying an offset). The interface may receive the indication from a remote location. The interface may be a user interface for receive the indication or instruction locally.

The apparatus may comprise an input for receiving antenna orientation.

Thus, as an operator moves and/or re-orientates the antenna, the device responds in real time.

The antenna may be a handheld antenna. The antenna is preferably a directional antenna. The antenna may be associated with the RF signal detector by virtue of being operatively connected to the RF signal detector. Thus, even if the antenna provides a received RF signal, the RF signal detector need not use or may discard the received RF signal. The antenna may be associated with the RF signal detector by virtue of being tethered to the RF signal detector. For example, a cable (e.g. a co-axial cable) may be replaced by an electrically-insulating lead (or "dummy lead") or an in-line isolator. Thus, the antenna, even if it is capable of providing an RF signal, need not provide the received RF signal to the RF signal detector. The antenna may be a dummy antenna (or "substitute antenna" or "substitute device"). Thus, the dummy antenna may not even be capable of receiving and providing an RF signal to the RF signal detector. The dummy antenna may be handheld. The antenna may be a dummy antenna. Thus, the antenna or the dummy antenna may mimic a directional antenna.

The RF signal may lie in a range between 10 kHz (or less) to 100 GHz (or more).

The wired connection may be a co-axial cable. The wired connection may be RF over fiber.

The at least one processor may be configured to calculate a gain and select a frequency band which results in an RF signal having characteristics (such as power and frequency) simulating an aggregated RF signal resulting from one or more typical, in-range RF sources.

An RF source may be a mobile communication device, such as smart phones and feature phones. An RF source may be a wireless data modem, such that used in IEEE 802.11 and other wireless local area networks, and in Bluetooth and other wireless personal local area networks. An RF source may be a mobile data modem, such as that used in GSM, EDGE, UMTS, HSPA and/or other mobile networks. An RF source may be a GPS jammer. An RF source may be a communications system jammer. An RF source may be an AM or FM radio transmitter. An RF source may be an eavesdropping device having a wireless transmitter.

An environment comprising a mixture of RF sources and/or which may include one or more of the same type of RF source may be simulated. The number, type, location and/or characteristics of RF sources may change over time.

The RF source may be a reflector or scatterer. Thus, the RF signal being simulated may result from scattering of RF transmissions from a radar transmitter and so the RF source may be a target for radar detection and/or other parts of the physical environment (i.e. clutter). Such radars can be monostatic, bistatic or multistatic.

The at least one processor may be configured to generate a set of IQ data based on at least two sets of weighted IQ data by linearly combining the at least two sets of weighted IQ data.

A weight may be a real number. The at least one processor may be configured to multiply each value in the set of IQ data by the respective weight.

A weight may be a complex number. The at least one processor may be configured to multiply each IQ pair in the set of IQ data by the respective complex weight.

The positioning device may be a global positioning system (GPS) device or other satellite- or ground-based navigation system device. The positioning device may be an inertial navigation system (INS) device. The positioning device may include a user interface which allows the operator to manually enter or select a position (for example, in the form of coordinates). The positioning device may be an interface for receiving, from a remote location, the position or data for enabling the position to be determined (e.g. the data may be carried by one or more timing beacons).

The apparatus may further comprise a first database storing data relating to propagation models and terrain. The propagation models may include one or more of, for example, a free space model, a ground reflection (two-ray) model, a knife-edge diffraction model, a Hata model, a Longley-Rice model, an Okumura model, statistical multi-path models. The at least one processor may be configured to calculate each respective weight in dependence upon a propagation model and terrain.

The apparatus may further comprise a second database storing data relating to antenna characteristics, such as, for example, gain of the antenna which is connected to the signal detector. The gain may depend on direction and frequency. The at least one processor may be configured to calculate each respective weight in dependence upon said antenna characteristics.

The apparatus may further comprise a third database storing data relating to characteristics of a plurality of RF sources. The at least one processor may be configured to calculate each respective weight in dependence upon characteristics of the respective RF source. The characteristics may include a transmit power, an antenna gain and/or position. A position and/or other characteristics may depend on time, i.e. the RF source may be mobile and may change over time.

The apparatus may comprise a synthesiser configured to generate a set of (un-weighted) IQ data. The IQ data may take the form of a time series of I and Q data values. The at least one processor may be configured to receive the set of IQ data from the synthesiser and to apply a corresponding weight. Additionally or alternatively, the apparatus may comprise fourth database storing at least one set of IQ data. The IQ data may take the form of recorded IQ data. The at least one processor may be configured to retrieve the set of IQ data from the fourth database and to apply a corresponding weight.

The circuit may comprise a pair of digital-to-analog converters (DAC). The DACs may be configured to receive the IQ data (i.e. digital samples of I and Q components) and to output analog I and Q signals. The circuit may comprise a modulator. The modulator may be configured to receive the analog I and Q signals from the DACs and to modulate the RF carrier signal.

The set of IQ data may be a first set of IQ data and the circuit may be a first circuit which is configured to receive the first set of IQ data, a first gain and a first frequency band and to generate a first RF signal in the first frequency band. The at least one processor may be configured to generate a second set of IQ data based on at least one set of weighted IQ data. The apparatus may further comprise a second, different circuit configured to receive the second set of IQ data, a second gain and a second frequency band which is different to the first frequency band and to generate a second RF signal in the second frequency band. Thus, the apparatus may be able to generate RF signals in different bands.

The apparatus may comprise more than two circuits, each circuit providing a respective RF signal in a different frequency band. The circuits may be distinct or separate, but of the same type.

The apparatus may further comprise an RF signal combiner which is configured to receive first and second RF signals (or more than two RF signals) and to combine the RF signals. Thus, the apparatus can be used to provide a multi-band RF signal. The apparatus may comprise a port for supplying the multi-band RF signal to a wired connection.

The apparatus may comprise an amplifier for amplifying the RF signal.

The apparatus may comprise an antenna for transmitting the RF signal wirelessly.

The apparatus may further comprise a device configured to provide the antenna orientation data which is attached to an antenna or an antenna substitute.

The apparatus may further comprise an interface configured to receive instructions from a remote location for controlling operation of the apparatus. The interface may include a wireless data modem or mobile network modem. The apparatus may comprise or may further comprise an interface configured to provide information on performance, for example, of the operator.

According to a second aspect of the present invention there is provided a system comprising the apparatus and a signal detector. The signal detector may be in wired connection with the apparatus. A path between an RF signal output of the apparatus and an RF signal input of the signal detector need not include a wireless section.

According to a third aspect of the present invention there is provided a method comprising receiving, from a positioning device, a location of an RF signal detector or a location of an antenna associated with the RF signal detector, receiving, from an orientation determining device, an orientation of the antenna associated with the RF signal detector, generating a set of IQ data based on at least one set of weighted IQ data, each set of weighted IQ data having a respective weight, each respective weight calculated in dependence upon the location and the orientation, generating an RF signal using the set of IQ data, and performing the preceding steps at least twice. The location may be an actual location or a simulated location.

According to a fourth aspect of the present invention there is provided a computer program which, when executed by one or more processors, causes the one or more processors to perform the method.

### Brief Description of the Drawings

Certain embodiments of the present invention will now be described, by way of example, with reference to the accompanying drawings, in which:
Figure 1 schematically illustrates training an operator of an RF signal detector using remote RF sources which transmit wireless RF signals;
Figure 2 schematically illustrates training an operator of a signal detector using an RF signal generator which provides an RF signal to an RF signal detector via a wired connection;
Figure 3 schematically illustrates virtual test transmitters simulated using the RF signal generator shown in Figure 2;
Figure 4 is a schematic block diagram of an RF signal generator;
Figure 5 is a schematic block diagram of a transmitter section of the RF signal generator shown in Figure 4;
Figure 6 a schematically illustrates training an operator of an RF signal detector by an instructor using a remote station;
Figure 7 is a process flow diagram of a process carried out by a processing section in the RF signal generator shown in Figure 7;
Figure 8 is a process flow diagram of a process of computing IQ data;
Figure 9 schematically illustrates a RF signal generator receiving antenna orientation data;
Figure 10 schematically illustrates a RF signal generator being used in time difference of arrival arrangement; and
Figure 11 schematically illustrates exchanged of signals between detector stations for a time difference of arrival measurement.

### Detailed Description of Certain Embodiments

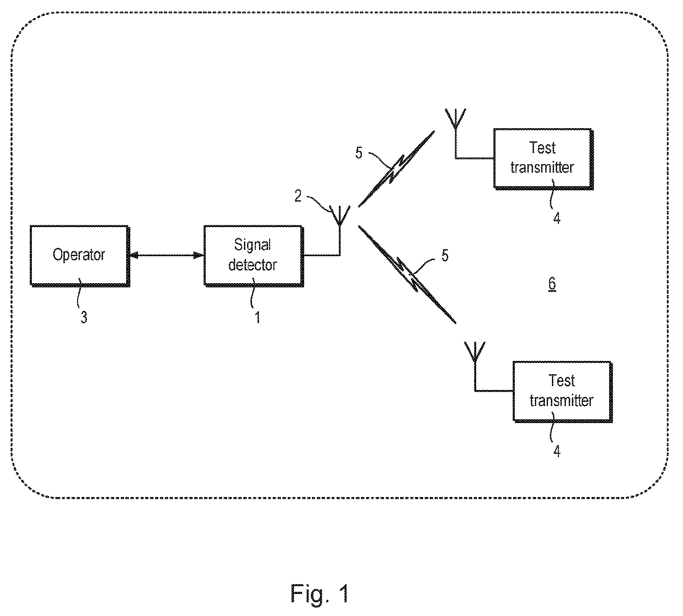

Referring to Figure 1, a radio frequency (RF) signal detector 1 is shown. The RF signal detector 1 can take the form of spectrum analyser. The RF signal detector 1 is coupled to an antenna 2 thereby allowing the RF signal detector 1 to detect wireless RF signals.

As shown in Figure 1, a user 3 (herein referred to as an "operator" or "trainee") can be trained by an instructor (not shown) to use the signal detector 1 by employing one or more test transmitters 4 which transmit respective wireless RF signals 5 located in a surrounding area 6.

The area 6 may be an enclosed space, such as building, installation, vehicle or vessel, or part of a building, installation, vehicle or vessel. The area 6 may be semi-enclosed or bounded, such as a stadium or street. The area 6 may be open, such as open ground. The area 6 may be mixture of different types of spaces. The area 6 may include land and/or sea.

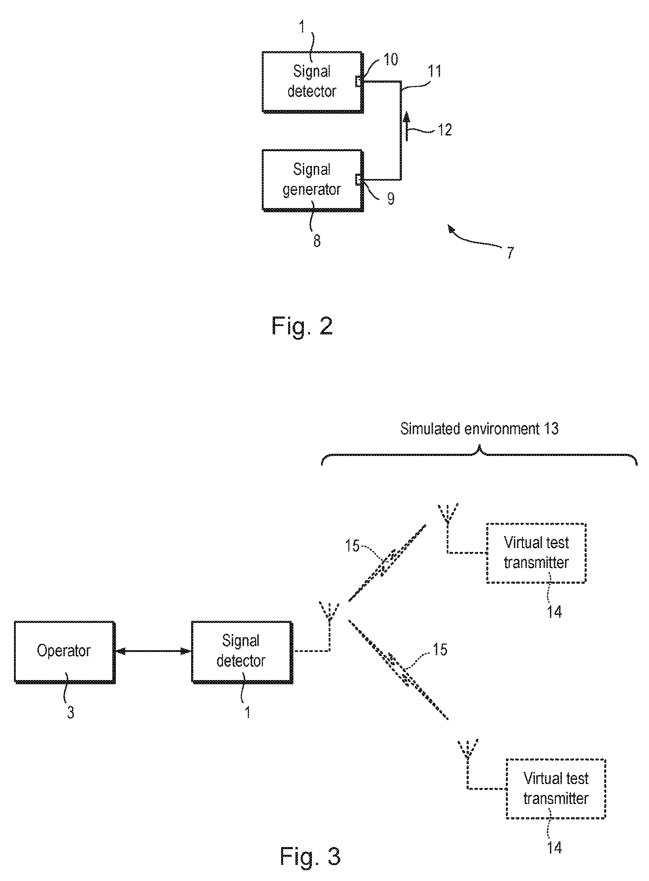

Referring to Figure 2, a training system 7 is shown. The training system 7 includes the signal detector 1 and an RF signal generator 8. An RF output 9 of the signal generator 8 is coupled to an RF input 10 of the signal detector 1 via a wired connection 11 (such as a co-axial cable) to supply an RF signal 12 directly to the signal detector 1.

The signal generator 8 does not need to transmit a wireless RF signal. Thus, the signal generator 8 may be one which is only capable of transmitting low-power RF signals, for example, in a range of -150 dBm to +10 dBm. However, the signal generator 8 may be one which is capable of transmitting RF signals at a higher power, e.g. greater than +10 dBm.

As shown in Figure 2, no wireless test transmitters 4 (Figure 1) need be used.

Referring also to Figure 3, the training system 7 can be used to provide an apparent signal environment (or "simulated environment") 13 which includes one or more simulated RF test transmitters 14 (herein referred to as "virtual test transmitters") transmitting simulated wireless RF signals 15.

The virtual test transmitters 14 do not physically exist. However, the signal generator 8 imitates the signal environment that the virtual test transmitters 14 would have produced at the RF input of the signal detector 1 if they were real. Thus, the signal generator 8 can help circumvent the need for using real test transmitters 4 (Figure 1).

Each virtual test transmitter 14 may be fixed or mobile. The signal generator 8 can mimic the signal environment as it would appear to the signal detector 1 at a particular position, p_{d}. The signal detector position may include latitude and longitude (or other set of two-dimensional coordinates) and, optionally, height.

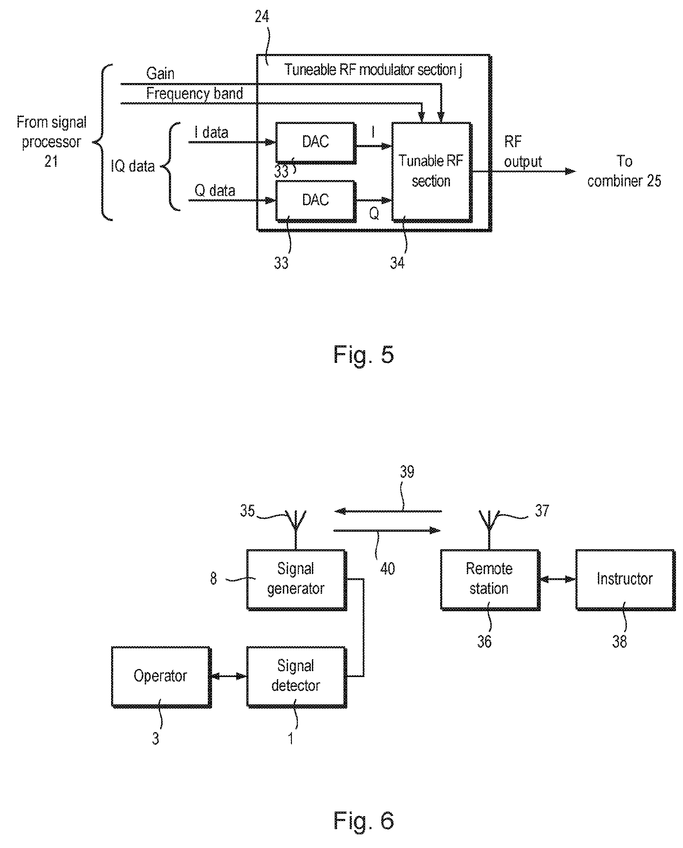

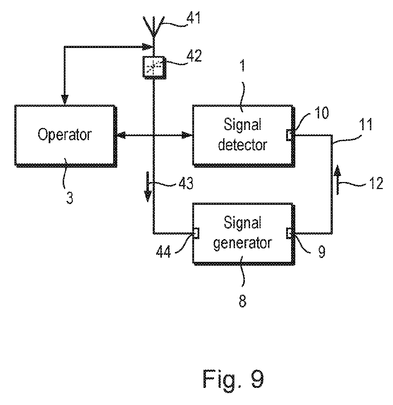

As will be explained in more detail later, the signal generator 8 can simulate changes in signal strength resulting from changes in orientation of a real, but non-operational directional antenna or substitute device 41 (Figure 9). The signal generator 8 can play back previously recorded signals. The signal generator 8 can be controlled from a remote station 36 (Figure 6) by an instructor 38 (Figure 6) and so vary the signal environment presented to the operators 3.

The training system 7 maybe used for training and/or assessing operators 3 in techniques of signal detection, direction finding (or "transmitter geolocation"), signal identification and eavesdropping. The system 7 can be used in-the-field, for example, in an area of the type in which the signal detector 1 would typically be used.

The signal generator 8 may be portable. However, the signal generator 8 may be semi-portable (i.e. capable of being moved by, for example one or two persons, but is not intended for ready transportation) or mounted to a vehicle (such as a truck) or fixed platform. The sensing equipment 1 may be portable, semi-portable, or mounted to a vehicle or fixed platform.

The sensing equipment 1 need not be specially-adapted other than by replacing a connection to the antenna 2 (Figure 1) by the wired connection 11. Thus, the signal generator 8 can be used with an existing signal detector 1, for example, detection equipment that a customer already has in service.

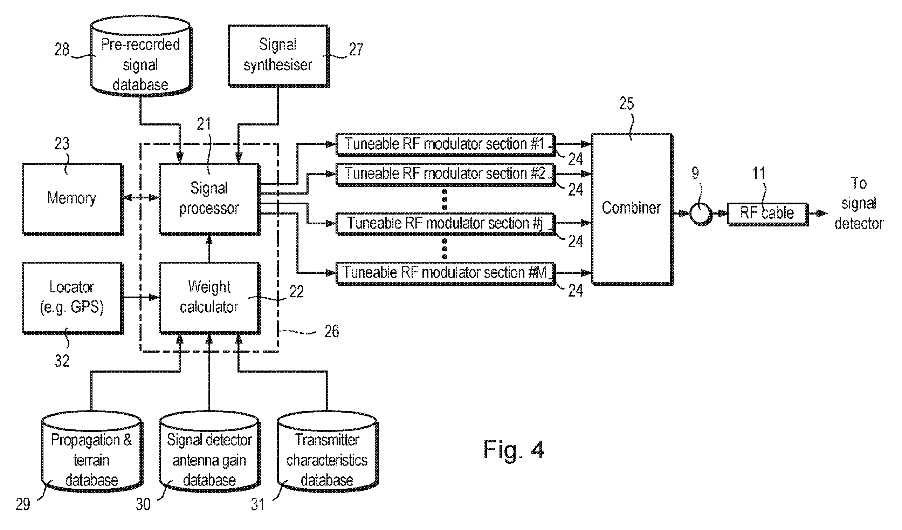

Referring to Figure 4, an example of a signal generator 8 is shown.

The signal generator 8 is able to produce signals corresponding to a large number (e.g. hundreds) of virtual test transmitters 14 (Figure 3), each having a respective position at a given time.

The signal generator 8 includes a signal processor 21, a weight calculator 22, memory 23, one or more RF signal-generating circuits 24 (herein referred to as "tuneable RF modulator sections") and an RF signal combiner 25. The signal processor 21 and a weight calculator 22 are implemented in software running on one or more processors 26.

In some embodiments, the one or more processors 26 may include one or more programmable central processing units capable of executing code to perform the functions and operations taught herein. In some embodiments, the one or more processors 26 may include one or more circuits or circuitry, for example, field programmable gate arrays configurable or programmable to perform the functions and operations taught herein. In some embodiments, the one or more processors 26 may include a combination of one or more programmable central processing units and one or more configurable circuits or circuitry to perform the functions and operations taught herein.

The signal generator 8 includes first and second sources 27, 28 of digital in-phase (I) and quadrature (Q) data (herein referred to simply as "IQ data") which are used to generate signals corresponding to the virtual test transmitters 14 (Figure 3).

The first IQ data source 27 takes the form of a synthesiser which calculates and outputs an IQ time series of I and Q data pairs for a given virtual test transmitter 14 (Figure 3). The synthesiser 27 may be implemented in software running on the one or more processors 26.

The second IQ data source 28 takes the form of a database 23 (herein referred to an "IQ data source database") which stores pre-recorded IQ data. The IQ data can be obtained using an RF signal detector by demodulating a received RF signal to produce analog I and Q components, digitising the analog I and Q components to produce digital I and Q data streams and storing the I and Q data streams. Pre-recorded IQ data may correspond to a single virtual test transmitter 14 (Figure 3). However, pre-recorded IQ data may correspond to more than one virtual test transmitter 14 (Figure 3). A recording of RF signals from, say, a distant city or other site having multiple RF sources can be used.

Referring still to Figure 4, the signal generator 8 includes additional databases 29, 30, 31 and a positioning device 32. A propagation model and terrain database 29 stores data relating to propagation models and terrain. An antenna characteristics database 30 stores data relating to characteristics of the signal detector antenna 2 (Figure 1). A virtual test transmitter database 31 stores data regarding the virtual test transmitters 14 (Figure 3) including transmit power, antenna gain and (time-dependent) position. The databases 22, 29, 39 31 maybe stored on one or more hard disk drives and/or solid-state hard drives (not shown).

The positioning device 32 is used to provide the position of the signal detector **1**. The positioning device 32 takes the form of a global positioning system (GPS) receiver. Additionally or alternatively, an inertial navigation system may be used. The position may be entered manually via a user interface (not shown).

Based on data taken from the databases 29, 30, 31 and the signal detector position, the weight calculator 22 calculates a weight w, typically a real number, for each selected virtual test transmitter 14 (Figure 3) and supplies the weights w to the signal processor 21.

The signal processor 21 applies the weight w (by multiplication) to a set of synthesised or pre-recorded IQ data to generate a set of weighted IQ data.

The signal processor 21 linearly combines one or more sets of weighted IQ data to form a set of IQ data for a tuneable RF modulator section 24. As will be explained in more detail later, different IQ data can be provided to different tuneable RF modulator sections 24.

Referring also to Figure 5, each tuneable RF modulator section 24 includes a pair of digital-to-analog converters (DAC) 33 and a tuneable RF section 34. The signal processor 21 supplies IQ data to the DACs 33 for conversion into corresponding analog I and Q signals. The signal processor 36 also supplies a gain value and frequency band information to the tuneable RF section 34. Frequency bands having the same or different widths can be used.

The tuneable RF section 34 modulates a carrier frequency to produce an intermediate frequency (IF) signal. The tuneable RF section 34 may include a frequency conversion section which may include one or more up-conversion and/or down- conversion paths. A path can be chosen to select the required frequency band.

Other forms of tuneable RF modulator section 24 may be used. For example, modulation can be performed in the digital domain and the resulting digital data stream is converted by a single DAC into an analogue signal. The analogue signal can then be up-converted or down-converted as necessary.

The signal generator 8 can replicate virtual transmitter characteristics (such as modulation waveform, *etc.),* although this may be limited by the bandwidth and dynamic range of the tuneable RF modulator sections 24.

A scenario, i.e. positions as a function of time and signal characteristics of virtual transmitters 14 (Figure 3), may be pre-programmed (stored in the virtual transmitter database 31). However, the scenario may be controlled from a remote station.

Referring to Figure 6, an instructor-controlled training system is shown. The system includes the signal detector 1 and signal generator 6 provided with a communications network interface 35 and a remote station 36 provided with a communications network interface 37. The communications network may wireless or wired. The remote station 36 may take the form of a personal computer. The remote station 38 might be used, for example, by an instructor 38 to create dynamic, time-varying signal detection problems for a trainee (i.e. operator 3) by transmitting instructions 39 for controlling the signal generator 8 and to receive telemetric information 40 on his or her performance. This can include setting or adjusting the location of the signal detector **1** and/or the location(s) of the virtual transmitter(s).

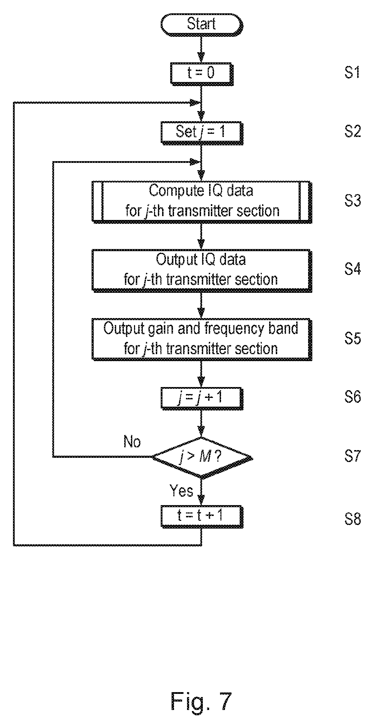

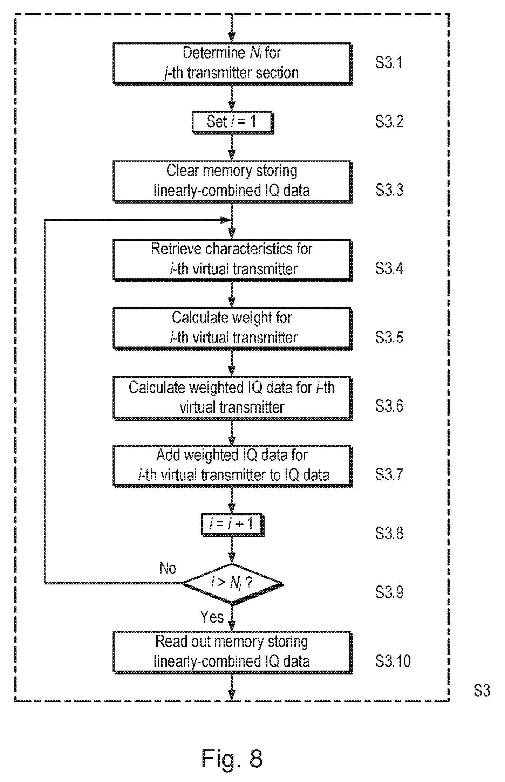

Referring to Figures 4 to 8, operation of the signal generator 8 will be further described in more detail.

When operation starts, a stream of synthesised or pre-recorded IQ data begins to be buffered in memory 23 (step S1).

The signal processor 21 initialises a tuneable RF modulator section counter, j (step S2).

Taking IQ data from memory 23, the signal processor 21 calculates IQ data in a first time window for a first tuneable RF modulator section 24 (step S3) and outputs a stream of IQ data, a gain value and frequency band information to the first tuneable RF modulator section 24 (steps S4 & S5).

In step S3, the signal processor 21 identifies the virtual test transmitters 14 (Figure 3) which need to be considered for the current (j-th) section 24 and determines their number, *Nⱼ* (step S3.1). This is to take into account the fact that certain virtual test transmitters 14 (Figure 3) may not contribute to the current frequency band. For example, one of the two GPS carrier frequencies may fall into the frequency range of the current tuneable RF modulator section 24 and so virtual test transmitters 14 (Figure 3) which are not a source or a significant source of RF power in this frequency band can be ignored, while other sources (such as a GPS jammers) are included and counted.

The signal processor 21 initialises a virtual test transmitter counter i (step S3.2) and clears a section of memory 23 reserved for storing a windowed stream of accumulated weighted IQ data, i.e. to form a windowed stream of linearly-combined IQ data (step S3.3).

The weight calculator 22 retrieves the characteristics for the current (i.e. *i*-th) virtual transmitter 24 and other data from databases 29, 30, 31 (step S3.4). Using this data and the current position, the weight calculator 22 calculates the weight w for the current virtual transmitter and passes this to the signal processor 21 (step S3.5).

The signal processor 21 retrieves a windowed stream of synthesised or pre-recorded IQ data from (a different section of) memory 23, applies the calculated weight to each IQ data value (step S3.6) and adds this windowed stream of weighted IQ data to the section of memory 23 reserved for storing accumulated weighted IQ data (step S3.7).

The signal processor 21 increments the virtual test transmitter counter i (step S3.8) and repeats steps S3.4 to S3.7 for the virtual test transmitter counter 24 until all relevant virtual test transmitters have contributed to accumulated weighted IQ data (step S3.9).

The signal processor 21 then reads out the accumulated weighted IQ data (i.e. linearly-combined IQ data) as a stream of IQ data to the current tuneable RF modulator section 24 (step S3.10).

The signal processor 21 increments the tuneable RF modulator section counter j (step S6) and repeats steps S3 to S5 for the next tuneable RF modulator section 24 in the same time window until respective IQ data, gain values and frequency band information have been provided to all the tuneable RF modulator sections 24 (step S7).

Thus, each tuneable RF modulator section 24 generates a (single-band) RF signal in a time window. The combiner 25 add these signals to form the (multi-band) output RF signal 12 which is presented to the RF output port 9.

Using a directional antenna can help identify and locate an RF source. Accordingly, the signal generator 8 can be adapted to take into account orientation of a directional antenna. Thus, training in direction-finding (DF) techniques can be provided using the signal generator 8. For example, the operator must determine a signal direction by finding the direction of strongest signal.

Referring to Figure 9, an arrangement is shown which includes a directional antenna (or a substitute device) 41 and a sensing device 42 attached to the antenna 41 capable of measuring instantaneous angle(s) of orientation of the antenna 41 and outputting antenna orientation data 43. The sensing device 42 may include MEMS-type accelerometers and/or a magnetic compass. If an antenna is used (i.e. a substitute device is not used), then no RF signal is taken from the antenna.

The antenna orientation data 43 includes an azimuthal angle (or "bearing"). The antenna orientation data 43 may include an angle of elevation. This can be used to train the operator to find an elevated (or lowered) or airborne RF sources. The antenna orientation data 43 may include axial rotation. This can be used to train the operator to identify polarized sources.

As shown in Figure 9, the signal generator 8 receives the antenna orientation data 43 via input 44. The weight calculator 22 (Figure 4) takes into account the antenna orientation data when calculating weights. In particular, weight calculator 22 (Figure 4) uses the antenna orientation data together with antenna gain characteristics stored in the antenna characteristics database 30 (Figure 4).

Thus, the signal generator 8 can mimic the effect on the strengths of the signals received from virtual transmitters that would have been produced by the actual directional antenna gain at the measured orientation of the device. The operator can respond to the signal indicated by the signal detector 1 by moving the directional antenna 41.

The antenna or substitute device 41 may be handheld. However, the antenna need not be handheld but can be any form of rotatable directional antenna, for example, mounted on a vehicle or fixed platform.

Information relating to movement of the signal detector 1 and/or antenna 41 over time can be recorded and may be stored in the signal generator 8 and/or transmitted via a wireless data interface (not shown) to a remote station, e.g. for use by an instructor.

As shown in Figure 2, a single signal detector 1 can be used in conjunction with a single signal generator 8. However, the system may include more than one signal detector 1 and a corresponding number of signal generators 8 that are synchronised and so present signals from the same set of virtual transmitters to each signal detector 1.

This can be used for team training, where members of a team co-operate to detect and identify multiple virtual signals.

Techniques used by teams include carrying out angle of arrival (AOA) direction-finding measurements from multiple locations to triangulate a transmitter location.

Signal detectors 1 and signal generators 8 may also be used for training operators at a control centre (not shown). Pairs of signal detector detectors 1 and signal generators 8 may report measurements to a remote control centre and the operators at the control centre (not shown) can interpret the measurements.

Another technique, used by individuals or teams, is proximity detection using power on arrival (POA). This technique is particularly useful when used in confined space, such as a building. In this technique, an RF source is located by approaching it closely enough to maximise power received.

It is also possible for members of a team, who are able to communicate with each other, to be trained in time difference of arrival (TDOA) transmitter location, using signal generators 8.

To make TDOA measurements, a signal detector 1 needs an IQ reference sequence, for example, in the form of sampled time series, as the basis for correlation with the received signal. In existing systems, such reference sequences are sent over wireless broadband communications links. However, in the present system, reference sequences can be sent from the signal generators 8, which already has IQ sequence information for the virtual transmitter, to the signal detector 1.

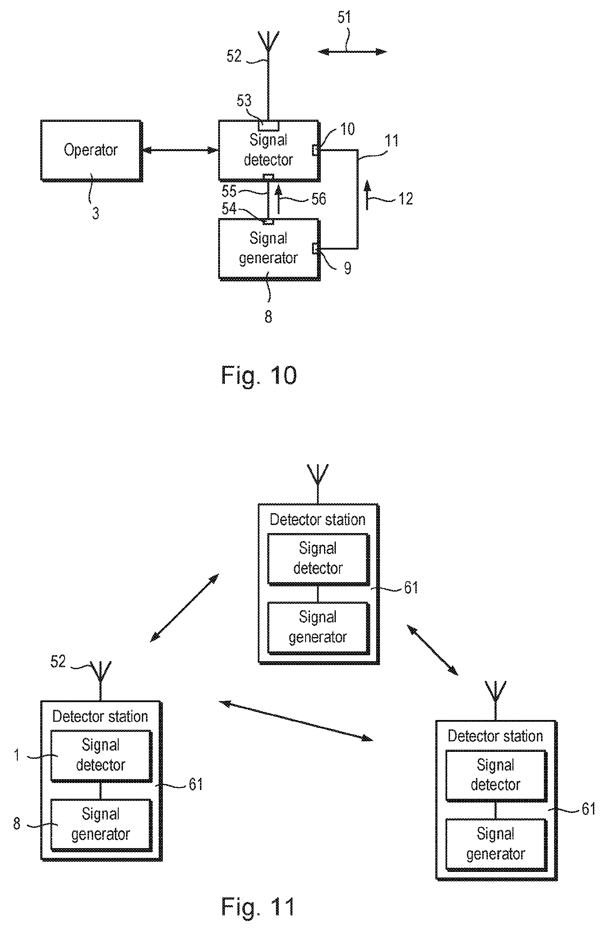

Referring to Figure 10, a TDOA arrangement is shown.

Correlation measurement data 51 are exchanged with other team members via a communications antenna 52 and a low-bandwidth (i.e. not broadband) data communications interface 53 in the signal detector 1.

The signal generator 8 includes a data communications interface 54 and a wired connection 55 to provide the reference sequences 56 using, for example, short-range Ethernet.

Referring also to Figure 3, the signal generator 8 sends an RF signal 12 to the signal detector 1, simulating the signal that would have been received from a virtual test transmitter 14 including the relevant time delay corresponding to the distance between the virtual test transmitter 14 and the signal detector 1.

Referring also to Figure 11, correlation measurements made at various (at least three) detector stations 61 are shared between team members over low data rate wireless communications links, as are the locations of the detector stations 61. A TDOA location estimation calculation may then be performed at any of the detector stations that has received a full set of correlation results and associated detector locations. The behaviour of the signal generators can be synchronised using GPS.

Thus, using signal generators 8 can help to reduce greatly the wireless bandwidth required for transmission between detector stations.

As explained earlier, the signal generator 8 may be incorporated into a signal detector 1 to form a single unit (not shown). Thus, an operator may switch the signal detector 1 into "simulation mode" in which the unit is programmed to output pre-defined signals.

The signal generator portion of the unit may provide an RF signal to the signal detector portion of the unit in the analog domain.

Alternatively, the signal generator portion of the unit may provide digital signals to the signal detector portion of the unit in the digital domain. In this case, digital signals can be "injected" into a digital path near the detector output (such as a processor input, prior to the data or representation of the data being displayed).

A further use of signal injection in the digital domain is the simulation of TDOA measurements. Signals can be injected into a central calculation point for transmitter location estimation.

All the techniques hereinbefore described maybe combined in a single training or assessment exercise, to include multiple in-field individuals and controllers at a central point, all overseen by an instructor who can determine the signal scenarios presented to the trainees, and measure their performance.

The examples hereinbefore described use wired connections to avoid the need for wireless RF test transmitters 4 (Figure 1).

However, the RF signal 12 (Figure 2) can be wirelessly transmitted from the signal generator 8 (Figure 2) using an antenna (not shown).

A signal generator 8 which wirelessly transmits an RF signal (Figure 2) may also serve as a geo-location beacon for use by receivers when GPS is not available.

For example, wireless transmission of an RF signal (Figure 2) from a signal generator 8 can be used to synchronise a network of signal detectors 1, such as RFeye (RTM) nodes, by providing a timing beacon in the absence of effective GPS signals.

Wireless transmission of an RF signal (Figure 2) from a signal generator 8 can be used for tracking of assets, such as vehicles, by placing a signal generator 8 on each asset. Surrounding receiver, such as RFeye (RTM) nodes, can locate the asset using direction-finding techniques.

It will be appreciated that many modifications may be made to the embodiments hereinbefore described.

For example, the signal detector may be a digital or analog detector. The signal detector may include a display for displaying a signal.

The signal generator can be used be to test signal detecting equipment.

## Claims

1. Apparatus (8) comprising:
a positioning device (32) for providing a location of an RF signal detector (1) or a location of an antenna (2, 41) associated with the RF signal detector;
an orientation determining device (42) for providing an orientation of the antenna associated with the RF signal detector;
at least one processor (26) configured to generate a set of IQ data based on at least one set of weighted IQ data, each set of weighted IQ data having a respective weight; and
a circuit (24) configured to generate an RF signal using the set of IQ data; wherein the at least one processor is configured to calculate each respective weight in dependence upon the location and the orientation;
wherein the positioning device is configured to feed back the location to the processor, the orientation determining device is configured to feed back the orientation to the processor, and the processor is configured to update the weights in dependence upon the location and the orientation.

2. Apparatus (8) according to claim 1, further comprising:
an interface (35) for receiving an indication of the location and/or an instruction (39) modifying the location, and/or an input for receiving the location.

3. Apparatus (8) according to any preceding claim, wherein the at least one processor (26) is configured to calculate each respective weight in dependence upon location of a respective wireless RF transmitter (4) being simulated.

4. Apparatus (8) according to any preceding claim, comprising:
an input (44) for receiving antenna orientation.

5. Apparatus (8) according to any preceding claim, wherein the antenna (2, 41) is a handheld antenna and/or a dummy antenna.

6. Apparatus (8) according to any preceding claim, wherein the at least one processor (26) is configured to generate a set of IQ data based on at least two sets of weighted IQ data by linearly combining the at least two sets of weighted IQ data.

7. Apparatus (8) according to any preceding claim, further comprising one or more of:
a first database (29) storing data relating to propagation models and terrain,
wherein the at least one processor (26) is configured to calculate each respective weight in dependence upon a propagation model and terrain;
a second database (30) storing data relating to antenna characteristics of a given signal detector, wherein the at least one processor is configured to calculate each respective weight in dependence upon said antenna characteristics; and
a third database (31) storing data relating to characteristics of a plurality of RF transmitters, wherein the at least one processor is configured to calculate each respective weight in dependence upon characteristics of the respective RF transmitter, the characteristics including one or more of a transmit power, an antenna gain and a position, wherein the position optionally depends on time.

8. Apparatus (8) according to any preceding claim, further comprising:
a synthesiser (27) configured to generate a set of IQ data, wherein the at least one processor (26) is configured to receive the set of IQ data from the synthesiser and to apply a corresponding weight and/or a fourth database (28) storing at least one set of IQ data, wherein the at least one processor is configured to retrieve the set of IQ data from the fourth database and to apply a corresponding weight.

9. Apparatus (8) according to any preceding claim, wherein the circuit (24) comprises:
a pair of DACs (33, 34) configured to receive the IQ data and to output analog I and Q signals; and
a modulator (34) configured to receive the analog IQ signals from DACs and to modulate the RF carrier signal to provide an intermediate signal.

10. Apparatus (8) according to any preceding claim:
wherein the set of IQ data is a first set of IQ data, the circuit (24) is a first circuit which is configured to receive the first set of IQ data, a first gain and a first frequency band and to generate a first RF signal in the first frequency band, and
wherein the at least one processor configured to generate second set of IQ data based on at least one set of weighted IQ data:
a second circuit configured to receive the second set of IQ data, a second gain and a second frequency band which is different to the first frequency band and to generate a second RF signal in the second frequency band.

11. Apparatus (8) according to claim 10, further comprising:
an RF signal combiner (25);
wherein the combiner is configured to receive first and second RF signals and to combine the signals to provide a multi-band RF signal (12).

12. Apparatus (8) according to any preceding claim, further comprising:
an interface (35) configured to receive instructions (39) from a remote location for controlling operation of the apparatus and/or to provide information on performance (40).

13. A system (7) comprising:
apparatus (8) according to any preceding claim; and
a signal detector (1) ;
wherein the signal detector is in wired connection (11) with the apparatus.

14. A method comprising:
receiving, from a positioning device (32), a location of an RF signal detector (1) or a location of an antenna (2, 41) associated with the RF signal detector;
receiving, from an orientation determining device (42), an orientation of the antenna associated with the RF signal detector;
generating a set of IQ data based on at least one set of weighted IQ data, each set of weighted IQ data having a respective weight, each respective weight calculated in dependence upon the location and the orientation;
generating an RF signal using the set of IQ data; and
performing the preceding steps at least twice.

15. A computer program which, when executed by at least one processor, causes the at least one processor to perform the method according to claim 14.

## Patentansprüche

1. Vorrichtung (8), die Folgendes beinhaltet:
eine Positionierungseinrichtung (32) zum Bereitstellen eines Standorts eines HF-Signal-Detektors (1) oder eines Standorts einer mit dem HF-Signal-Detektor assoziierten Antenne (2, 41);
eine Ausrichtungsbestimmungseinrichtung (42) zum Bestimmen einer Ausrichtung der mit dem HF-Signal-Detektor assoziierten Antenne;
mindestens einen Prozessor (26), der konfiguriert ist, um einen Satz IQ-Daten basierend auf mindestens einem Satz gewichteter IQ-Daten zu generieren, wobei jeder Satz gewichteter IQ-Daten ein jeweiliges Gewicht aufweist; und
eine Schaltung (24), die konfiguriert ist, um ein HF-Signal unter Verwendung des Satzes IQ-Daten zu generieren;
wobei der mindestens eine Prozessor konfiguriert ist, um jedes jeweilige Gewicht in Abhängigkeit vom Standort und von der Ausrichtung zu berechnen;
wobei die Positionierungseinrichtung konfiguriert ist, um den Standort an den Prozessor rückzumelden, die Ausrichtungsbestimmungseinrichtung konfiguriert ist, um die Ausrichtung an den Prozessor rückzumelden, und der Prozessor konfiguriert ist, um die Gewichte in Abhängigkeit vom Standort und von der Ausrichtung zu aktualisieren.

2. Vorrichtung (8) gemäß Anspruch 1, die weiterhin Folgendes beinhaltet:
eine Schnittstelle (35) zum Empfangen einer Anzeige des Standorts und/oder einer den Standort modifizierenden Anweisung (39) und/oder einer Eingabe zum Empfangen des Standorts.

3. Vorrichtung (8) gemäß einem vorhergehenden Anspruch, wobei der mindestens eine Prozessor (26) konfiguriert ist, um jedes jeweilige Gewicht in Abhängigkeit vom Standort eines jeweiligen simulierten drahtlosen HF-Senders (4) zu berechnen.

4. Vorrichtung (8) gemäß einem vorhergehenden Anspruch, die Folgendes beinhaltet:
eine Eingabe (44) zum Empfangen der Antennenausrichtung.

5. Vorrichtung (8) gemäß einem vorhergehenden Anspruch, wobei die Antenne (2, 41) eine Handantenne und/oder eine Dummyantenne ist.

6. Vorrichtung (8) gemäß einem vorhergehenden Anspruch, wobei der mindestens eine Prozessor (26) konfiguriert ist, um einen Satz IQ-Daten basierend auf mindestens zwei Sätzen gewichteter IQ-Daten durch lineares Kombinieren der mindestens zwei Sätze gewichteter IQ-Daten zu generieren.

7. Vorrichtung (8) gemäß einem vorhergehenden Anspruch, die weiterhin eines oder mehrere von Folgendem beinhaltet:
eine erste Datenbank (29), die Daten bezogen auf Ausbreitungsmodellen und Terrain speichert,
wobei der mindestens eine Prozessor (26) konfiguriert ist, um jedes jeweilige Gewicht in Abhängigkeit von einem Ausbreitungsmodell und Terrain zu berechnen;
eine zweite Datenbank (30), die Daten bezogen auf Antennenmerkmale eines gegebenen Signaldetektors speichert, wobei der mindestens eine Prozessor konfiguriert ist, um jedes jeweilige Gewicht in Abhängigkeit von den Antennenmerkmalen zu berechnen; und
eine dritte Datenbank (31), die Daten bezogen auf Merkmale einer Vielzahl von HF-Sendern speichert, wobei der mindestens eine Prozessor konfiguriert ist, jedes jeweilige Gewicht in Abhängigkeit von Merkmalen des jeweiligen HF-Senders zu berechnen, wobei die Merkmale eines oder mehrere einer Sendeleistung, eines Antennengewinns und einer Position einschließen, wobei die Position optional von Zeit abhängt.

8. Vorrichtung (8) gemäß einem vorhergehenden Anspruch, die weiterhin Folgendes beinhaltet:
einen Synthesizer (27), der konfiguriert ist, um einen Satz IQ-Daten zu generieren, wobei der mindestens eine Prozessor (26) konfiguriert ist, um den Satz IQ-Daten vom Synthesizer zu empfangen und ein entsprechendes Gewicht anzuwenden, und/oder eine vierte Datenbank (28), die mindestens einen Satz IQ-Daten speichert, wobei der mindestens eine Prozessor konfiguriert ist, um den Satz IQ-Daten von der vierten Datenbank abzurufen und ein entsprechendes Gewicht anzuwenden.

9. Vorrichtung (8) gemäß einem vorhergehenden Anspruch, wobei die Schaltung (24) Folgendes beinhaltet:
ein Paar DACs (33, 34), die konfiguriert sind, um die IQ-Daten zu empfangen und analoge I- und Q-Signale auszugeben; und
einen Modulator (34), der konfiguriert ist, um die analogen IQ-Signale von DACs zu empfangen und das HF-Trägersignal zu modulieren, um ein Zwischensignal bereitzustellen.

10. Vorrichtung (8) gemäß einem vorhergehenden Anspruch:
wobei der Satz IQ-Daten ein erster Satz IQ-Daten ist, die Schaltung (24) eine erste Schaltung ist, die konfiguriert ist, um den ersten Satz IQ-Daten, einen ersten Gewinn und ein erstes Frequenzband zu empfangen und ein erstes HF-Signal im ersten Frequenzband zu generieren, und
wobei der mindestens eine Prozessor konfiguriert ist, um einen zweiten Satz IQ-Daten basierend auf mindestens einem Satz gewichteter IQ-Daten zu generieren,
wobei eine zweite Schaltung konfiguriert ist, um den zweiten Satz IQ-Daten, einen zweiten Gewinn und ein zweites Frequenzband, das sich vom ersten Frequenzband unterscheidet, zu empfangen und ein zweites HF-Signal im zweiten Frequenzband zu generieren.

11. Vorrichtung (8) gemäß Anspruch 10, die weiterhin Folgendes beinhaltet:
einen HF-Signal-Kombinator (25);
wobei der Kombinator konfiguriert ist, um ein erstes und zweites HF-Signal zu empfangen und die Signale zu kombinieren, um ein Multiband-HF-Signal (12) bereitzustellen.

12. Vorrichtung (8) gemäß einem vorhergehenden Anspruch, die weiterhin Folgendes beinhaltet:
eine Schnittstelle (35), die konfiguriert ist, um Anweisungen (39) von einem entfernten Standort zum Steuern des Betriebs der Vorrichtung zu empfangen und/oder um Informationen über die Leistung (40) bereitzustellen.

13. System (7), das Folgendes beinhaltet:
Vorrichtung (8) gemäß einem vorhergehenden Anspruch; und
einen Signaldetektor (1);
wobei der Signaldetektor mit der Vorrichtung in drahtgebundener Verbindung (11) steht.

14. Verfahren, das Folgendes beinhaltet:
Empfangen, von einer Positionierungseinrichtung (32), eines Standorts eines HF-Signal-Detektors (1) oder eines Standorts einer mit dem HF-Signal-Detektor assoziierten Antenne (2, 41);
Empfangen, von einer Ausrichtungsbestimmungseinrichtung (42), einer Ausrichtung der mit dem HF-Signal-Detektor assoziierten Antenne;
Generieren eines Satzes IQ-Daten basierend auf mindestens einem Satz gewichteter IQ-Daten, wobei jeder Satz gewichteter IQ-Daten ein jeweiliges Gewicht aufweist, wobei jedes jeweilige Gewicht in Abhängigkeit vom Standort und von der Ausrichtung berechnet wird;
Generieren eines HF-Signals unter Verwendung des Satzes IQ-Daten; und
mindestens zweimal Durchführen der vorhergehenden Schritte.

15. Computerprogrammprodukt, das, wenn es von mindestens einem Prozessor ausgeführt wird, verursacht, dass der mindestens eine Prozessor das Verfahren gemäß Anspruch 14 durchführt.

## Revendications

1. Appareil (8) comportant :
un dispositif de positionnement (32) servant à fournir un emplacement d'un détecteur de signal RF (1) ou un emplacement d'une antenne (2, 41) associée au détecteur de signal RF ;
un dispositif de détermination d'orientation (42) servant à fournir une orientation de l'antenne associée au détecteur de signal RF ;
au moins un processeur (26) configuré pour générer un ensemble de données IQ en fonction d'au moins un ensemble de données IQ pondérées, chaque ensemble de données IQ pondérées ayant un poids respectif ; et
un circuit (24) configuré pour générer un signal RF au moyen de l'ensemble de données IQ ; dans lequel ledit au moins un processeur est configuré pour calculer chaque poids respectif en fonction de l'emplacement et de l'orientation ;
dans lequel le dispositif de positionnement est configuré pour fournir en retour l'emplacement au processeur, le dispositif de détermination d'orientation est configuré pour fournir en retour l'orientation au processeur, et le processeur est configuré pour mettre les poids à jour en fonction de l'emplacement et de l'orientation.

2. Appareil (8) selon la revendication 1, comportant par ailleurs :
une interface (35) servant à recevoir une indication de l'emplacement et/ou une instruction (39) modifiant l'emplacement, et/ou une entrée servant à recevoir l'emplacement.

3. Appareil (8) selon l'une quelconque des revendications précédentes, dans lequel ledit au moins un processeur (26) est configuré pour calculer chaque poids respectif en fonction de l'emplacement d'un émetteur RF sans fil respectif (4) à simuler.

4. Appareil (8) selon l'une quelconque des revendications précédentes, comportant :
une entrée (44) servant à recevoir l'orientation de l'antenne.

5. Appareil (8) selon l'une quelconque des revendications précédentes, dans lequel l'antenne (2, 41) est une antenne portable et/ou une antenne fictive.

6. Appareil (8) selon l'une quelconque des revendications précédentes, dans lequel ledit au moins un processeur (26) est configuré pour générer un ensemble de données IQ en fonction d'au moins deux ensembles de données IQ pondérées par la combinaison linéaire desdits au moins deux ensembles de données IQ pondérées.

7. Appareil (8) selon l'une quelconque des revendications précédentes, comportant par ailleurs une ou plusieurs parmi :
une première base de données (29) stockant des données se rapportant à un terrain et à des modèles de propagation,
dans lequel ledit au moins un processeur (26) est configuré pour calculer chaque poids respectif en fonction d'un terrain et d'un modèle de propagation ;
une deuxième base de données (30) stockant des données se rapportant à des caractéristiques d'antenne d'un détecteur de signal donné, dans lequel ledit au moins un processeur est configuré pour calculer chaque poids respectif en fonction desdites caractéristiques d'antenne ; et
une troisième base de données (31) stockant des données se rapportant à des caractéristiques d'une pluralité d'émetteurs RF, dans lequel ledit au moins un processeur est configuré pour calculer chaque poids respectif en fonction des caractéristiques de l'émetteur RF respectif, les caractéristiques comprenant un ou plusieurs parmi une puissance d'émission, un gain d'antenne et une position, dans lequel la position dépend éventuellement du temps.

8. Appareil (8) selon l'une quelconque des revendications précédentes, comportant par ailleurs :
un synthétiseur (27) configuré pour générer un ensemble de données IQ, dans lequel ledit au moins un processeur (26) est configuré pour recevoir l'ensemble de données IQ en provenance du synthétiseur et pour appliquer un poids correspondant et/ou une quatrième base de données (28) stockant au moins un ensemble de données IQ, dans lequel ledit au moins un processeur est configuré pour extraire l'ensemble de données IQ en provenance de la quatrième base de données et pour appliquer un poids correspondant.

9. Appareil (8) selon l'une quelconque des revendications précédentes, dans lequel le circuit (24) comporte :
une paire de DAC (digital-to-analog converters - convertisseurs numériques-analogiques) (33, 34) configurés pour recevoir les données IQ et pour émettre en sortie des signaux I et Q analogiques ; et
un modulateur (34) configuré pour recevoir des signaux IQ analogiques en provenance des DAC et pour moduler le signal porteur RF pour fournir un signal intermédiaire.

10. Appareil (8) selon l'une quelconque des revendications précédentes :
dans lequel l'ensemble de données IQ est un premier ensemble de données IQ, le circuit (24) est un premier circuit qui est configuré pour recevoir le premier ensemble de données IQ, un premier gain et une première bande de fréquences et pour générer un premier signal RF dans la première bande de fréquences, et
dans lequel ledit au moins un processeur est configuré pour générer un deuxième ensemble de données IQ en fonction d'au moins un ensemble de données IQ pondérées :
un deuxième circuit est configuré pour recevoir le deuxième ensemble de données IQ, un deuxième gain et une deuxième bande de fréquences qui est différente de la première bande de fréquences et pour générer un deuxième signal RF dans la deuxième bande de fréquences.

11. Appareil (8) selon la revendication 10, comportant par ailleurs :
un combineur de signaux RF (25) ;
dans lequel le combineur est configuré pour recevoir des premier et deuxième signaux RF et pour combiner les signaux pour fournir un signal RF multibande (12).

12. Appareil (8) selon l'une quelconque des revendications précédentes, comportant par ailleurs :
une interface (35) configurée pour recevoir des instructions (39) en provenance d'un emplacement à distance à des fins de commande du fonctionnement de l'appareil et/ou à des fins de fourniture d'informations se rapportant à la performance (40).

13. Système (7) comportant :
un appareil (8) selon l'une quelconque des revendications précédentes ; et
un détecteur de signal (1) ;
dans lequel le détecteur de signal est en connexion filée (11) avec l'appareil.

14. Procédé comportant :
l'étape consistant à recevoir, en provenance d'un dispositif de positionnement (32), un emplacement d'un détecteur de signal RF (1) ou un emplacement d'une antenne (2, 41) associée au détecteur de signal RF ;
l'étape consistant à recevoir, en provenance d'un dispositif de détermination d'orientation (42), une orientation de l'antenne associée au détecteur de signal RF ;
l'étape consistant à générer un ensemble de données IQ en fonction d'au moins un ensemble de données IQ pondérées, chaque ensemble de données IQ pondérées ayant un poids respectif, chaque poids respectif étant calculé en fonction de l'emplacement et de l'orientation ;
l'étape consistant à générer un signal RF au moyen de l'ensemble de données IQ ; et
l'étape consistant à effectuer les étapes précédentes au moins deux fois.

15. Programme informatique qui, quand il est exécuté par au moins un processeur, entraîne ledit au moins un processeur à effectuer le procédé selon la revendication 14.
